# EUROPÄISCHE PATENTSCHRIFT

(11) **EP 2 031 313 B1**
(45) Veröffentlichungstag und Bekanntmachung des Hinweises auf die Patenterteilung: **09.09.2015**
(21) Anmeldenummer: 08012370.6
(22) Anmeldetag: 09.07.2008
(51) Int. Cl.: F04D 15/02, F04D 29/62, H02K 11/00, F24D 19/10

(54) **Steuerung zum Ein- und Ausschalten einer Zirkulationspumpe einer Warmwasserversorgung**
Device for turning on and off the circulation pump of a hot water supply
Commande destinée à allumer et éteindre une pompe de circulation d'une alimentation en eau chaude

(30) Priorität: 28.08.2007 DE 102007042186
(43) Veröffentlichungstag der Anmeldung: 04.03.2009
(73) Patentinhaber: Deutsche Vortex GmbH & Co. KG, 71642 Ludwigsburg (DE)
(72) Erfinder: Brösamle, Pino, 71679 Asperg (DE); Kuhr, Hartmut, 41065 Mönchengladbach (DE)
(74) Vertreter: Patentanwälte Ruff, Wilhelm, Beier, Dauster & Partner

(56) Entgegenhaltungen:
- EP-A- 1 130 341
- EP-A- 1 239 152
- EP-A- 1 898 097
- WO-A-99/01665
- DE-A1- 10 128 444
- US-A- 5 622 221

## Beschreibung

Die Erfindung betrifft eine Zirkulationspumpe einer Warmwasserversorgung mit einem Elektromotor und mit einer Steuerung entsprechend dem Oberbegriff von Patentanspruch 1.

Es ist bekannt, bei einer derartigen Zirkulationspumpe den Elektromotor an dem Pumpengehäuse innerhalb eines Mantels anzubringen. Der Mantel wird von einer Kappe fortgesetzt, die die Motorsteuerung für den Elektromotor enthält. Außerdem ist es bekannt, innerhalb dieser Kappe weitere Elemente unterzubringen, beispielsweise eine Zeitschaltuhr.

Es ist auch eine Steuerung für Zirkulationspumpen bekannt (DE 101 28 444 B4), mit der bedarfsabhängig ein Ein- und Ausschalten der Zirkulationspumpe durchgeführt wird. Die Schaltungsanordnung enthält einen Sensor, der die Temperatur im Vorlauf der Zirkulationsleitung erfasst, sowie einen Sensor, der die Temperatur im Rücklauf der Zirkulationsleitung erfasst. Mittels einer Schaltungsanordnung, die die Signale der beiden Sensoren verarbeitet, wird ein Entnahmeprofil ermittelt, mittels dessen ein Pumpenschalter geschaltet wird. Die Schaltungsanordnung zum Verarbeiten der Signale ist ein Zusatzgerät, das zusätzlich zu einer Zirkulationspumpe installiert wird. Das Gerät muss in die elektrische Zuleitung zu der Zirkulationspumpe eingesetzt werden. Ferner müssen die beiden Sensoren an den betreffenden Orten angebracht und mit dem Zusatzgerät verbunden werden.

Es ist auch eine in ihrer Drehzahl veränderbare Dosierpumpe bekannt (WO 99/01665 A), die in eine Heizungsanlage eingebaut wird. Mittels einer Regelung wird die Drehzahl der Dosierpumpe verändert. Die Dosierpumpe besitzt einen Pumpenteil, der eine stationäre Achse aufweist, auf dem ein mit Pumpenelementen versehener Rotor eines Elektromotors angeordnet ist. Der zylindrische Rotor ist mit Permanentmagneten bestückt. Er ragt in einen Kunststoffkörper, der zur Aufnahme des Rotors eine zylindrische Aussparung besitzt. Der zylindrische Körper ist mit den Statorwicklungen und Hall-Generatoren bestückt. Der auch außen zylindrische Kunststoffkörper ist mit einem Außengehäuse umgeben, das den Kunststoffkörper von dem Rotor hinweg überragt und Platinen mit elektronischen Elementen enthält. Das Gehäuse ist mit einem Deckel verschlossen.

Es ist auch bekannt (US 5 622 221 A), eine Heizanlage in Zonen zu unterteilen, die jeweils eine Pumpe enthalten. Diese Pumpen besitzen einen in einem Gehäuse angeordneten Rotor, der von einem Stator umgeben ist, der ein Außengehäuse aufweist. Seitlich an dem Außengehäuse ist ein Gehäuse mit Elementen der Steuerung angeordnet.

Der Erfindung liegt die Aufgabe zugrunde, eine Zirkulationspumpe einer Warmwasserversorgung mit einem Elektromotor und mit einer Steuerung zu schaffen, bei der die Gefahr von Installationsfehlern verringert ist, auch wenn die Installation nicht nur von Fachleuten durchgeführt wird.

Diese Aufgabe wird durch den Patentanspruch 1 gelöst.

Durch die Erfindung wird eine vorinstallierte Zirkulationspumpe geschaffen, die bereits die Schaltungsanordnung zur bedarfsabhängigen Steuerung des Ein- und Ausschaltens enthält. Die vollständige Funktion kann daher bereits werksseitig geprüft werden, so dass mögliche Fehler bereits dort ausgeschaltet werden. Zusätzlich ermöglicht die Erfindung eine sehr kompakte Ausbildung. Durch die Aufteilung in Platinen und die Verbindung mittels einer steckbaren Zwischenplatine ergibt sich eine klare Aufteilung, die insbesondere auch eine Serienfertigung von Zirkulationspumpen erlaubt, die mit oder ohne die Schaltungsanordnung zur Verarbeitung der Signale der Temperatursensoren ausgerüstet sind. Das Anschließen des Sensors, mit welchem die Temperatur im Vorlauf erfasst wird, ist äußerst einfach und kann ohne Weiteres auch von Nichtfachleuten durchgeführt werden.

In weiterer Ausgestaltung der Erfindung wird vorgesehen, dass der Sensor zum Erfassen der Temperatur im Rücklauf im Inneren der Zirkulationspumpe angeordnet und über die Zwischenplatine mit der Platine der Schaltungsanordnung zur Verarbeitung der Signale verbunden ist. Dadurch wird erreicht, dass dieser Sensor nicht auf einer Baustelle installiert werden muss und dass auch keine Vorkenntnisse erfordernden Anschlussarbeiten zum Anschließen des Sensors erforderlich sind.

Um das Innere der Kappe tropfwassergeschützt gestalten zu können, ist die Kappe im Bereich der Kontaktstifte mit einem Dichtungsstopfen aus gummielastischem Material versehen, der den Stecker der Leitung des Sensors dichtend aufnimmt. Bei einer vorteilhaften Ausführungsform ist vorgesehen, dass der Dichtungsstopfen eine Vertiefung zur Aufnahme des Steckers aufweist, deren Boden mit Öffnungen für die Kontaktstifte versehen ist. Dadurch wird eine mehrfache Abdichtung erhalten, nämlich zwischen der Vertiefung und dem Stecker sowie zwischen den Kontaktstiften und den Öffnungen im Boden der Vertiefung zur Aufnahme des Steckers für die Kontaktstifte.

Zweckmäßigerweise ist vorgesehen, dass die Vertiefung zur Aufnahme eines Flachsteckers eine schlitzförmige Gestalt besitzt. Dabei wird weiter vorteilhaft vorgesehen, dass der nach außen von dem Gehäuse abragende Teil des Dichtungsstopfens kegelstumpfförmig gestaltet ist. Dadurch ist der Stecker im Bereich seines aus der Vertiefung herausragenden Endes ergreifbar, so dass er sicher auf die Kontaktstifte aufgesteckt und auch abgezogen werden kann, ohne dass die Leitung belastet wird.

Weiter ist zweckmäßigerweise vorgesehen, dass der Dichtungsstopfen mit einer umlaufenden Nut in eine Aussparung der Wand der Kappe einrastbar ist. Damit wird auch hier eine tropfwassergeschützte Abdichtung erhalten. Um sicherzustellen, dass der Dichtungsstopfen nur in richtiger Position montiert werden kann, wird vorgesehen, dass die Aussparung der Wand der Kappe und die Nut des Dichtungsstopfens mit einander entsprechenden Profilierungen versehen sind. Um zu erreichen, dass der Dichtungsstopfen richtig angesetzt wird, wird weiter vorgesehen, dass der nach innen in die Kappe ragende Teil des Dichtungsstopfens kegelstumpfförmig ausgeführt ist und eine der Profilierung der Aussparung der Kappe angepasste Profilierung besitzt. Damit wird sichergestellt, dass der Dichtungsstopfen so in die Wand eingesetzt wird, dass die Vertiefung auch korrekt den Kontaktstiften zugeordnet ist.

Weitere Merkmale und Vorteile der Erfindung ergeben sich aus der nachfolgenden Beschreibung der in der Zeichnung dargestellten Ausführungsformen und den Unteransprüchen.
Fig. 1 zeigt einen Axialschnitt durch ein Gehäuse und einen Elekt-romotor für eine Zirkulationspumpe einer Warmwasserversorgung, wobei das eigentliche Pumpengehäuse nicht dargestellt ist,
Fig. 2 einen Schnitt durch eine zu dem Gehäuse der Fig. 1 gehörende Kappe entlang der Linie II-II der Fig. 1,
Fig. 3 eine perspektivische Ansicht einer Einzelheit der Fig. 2 und
Fig. 4 einen Schnitt entlang der Linie IV-IV der Fig. 3.

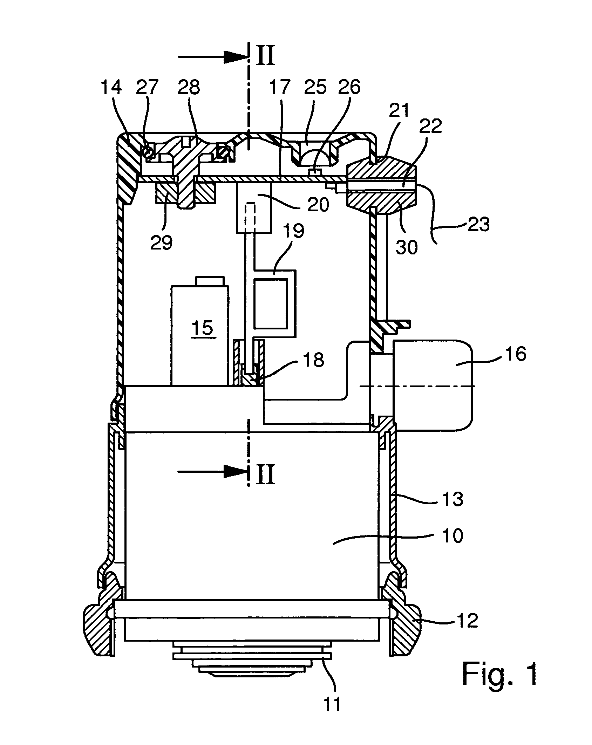

In Fig. 1 ist von einer Zirkulationspumpe für eine Brauchwasseranlage nur der Elektromotor 10 dargestellt, der einen halbkugelförmigen Rotor 11 antreibt, der als ein Radialpumpenrad ausgebildet ist, das das zu pumpende Wasser axial ansaugt und in die radiale Richtung fördert. Der Elektromotor 10 wird mit einer Überwurfmutter 12 an einem nicht dargestellten Pumpengehäuse befestigt.

Der Elektromotor 10 ist mit einem Mantel 13 umgeben, der in Richtung von dem Rotor 11 hinweg mittels einer Kappe 14 fortgesetzt wird. Die Kappe 14 umgibt eine Motorsteuerung, von der hier ein Kondensator 15 sichtbar ist. Die Stromversorgung zu dem Elektromotor 10 erfolgt über ein Versorgungskabel, das durch eine Kabeltülle 16 in den Raum der Kappe 14 hereingeführt wird und dort in nicht näher dargestellter Weise an die Motorsteuerung angeschlossen ist.

Innerhalb der Kappe 14 ist eine Platine 17 angeordnet, die eine Schaltungsanordnung aufnimmt, die zum bedarfsabhängigen automatischen Ein- und Ausschalten des Motors 10 der Zirkulationspumpe dient und die beispielsweise so aufgebaut ist, wie das aus der DE 101 28 444 B4 bekannt ist. Diese Platine enthält eine Schaltungsanordnung zur Verarbeitung der Signale eines Sensors, der die Temperatur im Rücklauf erfasst. Dieser Sensor ist im Innern der Pumpe angeordnet, bei dem Ausführungsbeispiel an der Außenwandung des den Rotor 11 umgebenden Gehäuses das innen dem Wasser ausgesetzt ist. Dieser Sensor ist somit direkt in die Pumpe integriert, so dass er keiner Anschlussarbeiten auf einer Baustelle bedarf.

Die Motorsteuerung, die ebenfalls auf einer Platine angeordnet ist, ist mit einer Kontaktleiste 18 versehen, in die eine Zwischenplatine 19 eingesteckt wird. Die Zwischenplatine 19 verbindet die Kontaktleiste 18 mit einer Kontaktleiste 20 der Platine 17 mit der Schaltungsanordnung zum Verarbeiten der Signale. Das Signal des in die Pumpe integrierten Temperatursensors, der die Temperatur im Rücklauf der Zirkulationsleitung erfasst, wird über die Zwischenplatine 19 zu der Platine 17 geführt.

Die Platine 17 ist mit Kontaktstiften versehen, die sich im Bereich einer Öffnung 21 in der Seitenwand der Kappe 14 befindet. Auf diese Kontaktstifte wird ein Flachstecker 22 aufgesteckt, der mittels eines Flachkabels 23 mit einem nicht dargestellten Temperatursensor verbunden ist, der an einer Vorlaufleitung der Wasserversorgung angebracht wird. Dabei wird zweckmäßigerweise vorgesehen, dass der Temperatursensor mit dem Flachkabel 23 und dem Flachstecker 22 mittels einer trennbaren Einrichtung unverlierbar an der Zirkulationspumpe angebracht wird, beispielsweise an der Kappe 14. Damit wird sichergestellt, dass der Temperatursensor vorhanden ist, wenn die Zirkulationspumpe an eine Baustelle gebracht und dort montiert wird.

Die Kappe 14 ist innen mit Rastansätzen 24 versehen, die von ihrer Oberseite abragen und die die Platine 17 aufnehmen. Ferner ist die Oberseite der Kappe 14 mit Aussparungen versehen. In einer Aussparung ist ein Lichtleiter 25 dichtend eingesetzt, durch den hindurch eine Leuchtdiode 26 sichtbar ist. Die Leuchtdiode 26 wird entsprechend den Betriebszuständen der Zirkulationspumpe unterschiedlich angesteuert, so dass die Betriebszustände der Zirkulationspumpe erkennbar sind.

In eine weitere Aussparung der Oberseite der Kappe 14 ist unter Zwischenfügen eines Dichtungsringes 27 ein Drehknopf 28 eingesetzt, der zu einem Potentiometer 29 der Schaltungsanordnung zum Verarbeiten der Signale der Temperatursensoren gehört. Mittels des Potentiometers 29 ist es möglich, die Lern- und Verlernfunktion zu beeinflussen.

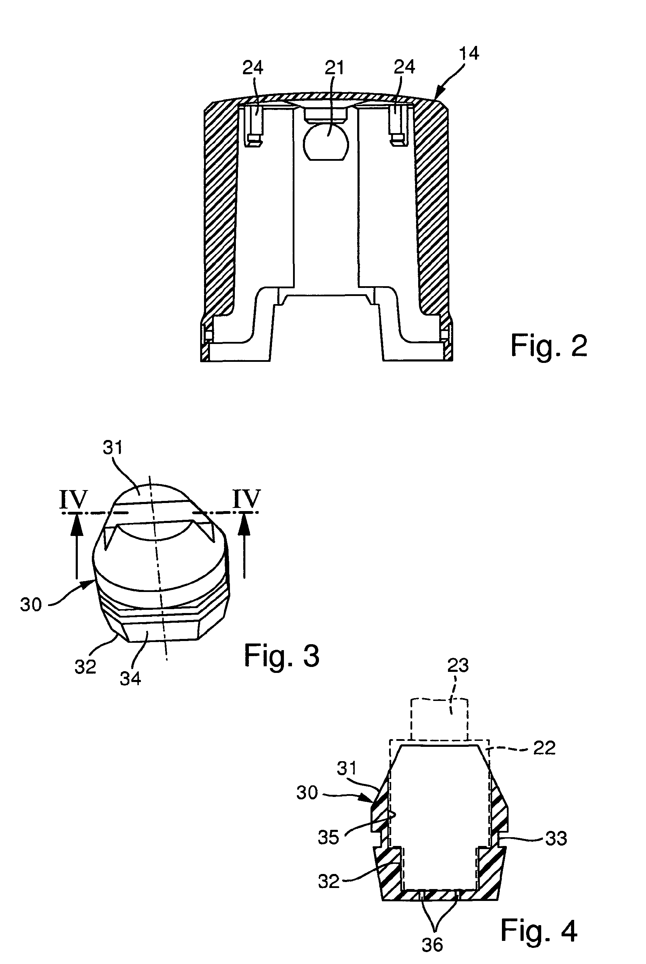

Die Kappe 15 ist nicht nur im Bereich der Kappentülle 16 und des Drehknopfes 28 tropfwasserdicht abgedichtet, sondern auch in dem Bereich, in welchem der Flachstecker 21 mit den Kontaktstiften der Platine 17 verbunden wird. In die Aussparung 21 ist ein Dichtungsstopfen 30 eingesetzt, der aus einem gummielastischen Material besteht. Der Dichtungsstopfen 30, der in Fig. 3 und 4 in größerem Maßstab dargestellt ist, besitzt eine doppelkegelstumpfförmige Gestalt, d.h. einen nach außen ragenden kegelstumpfförmigen Ansatz 31 und einen nach innen in die Kappe 14 ragenden Ansatz 32. Zwischen diesen beiden Ansätzen 31, 32 ist eine umlaufende Nut 33 vorgesehen, die an die Abmessungen der Aussparung 21 angepasst ist. Die Aussparung 21 und die Nut 33 sind mit einer Profilierung versehen, bei dem Ausführungsbeispiel mit einer Abflachung, die als eine parallel zur Ebene der Steckkontakte verlaufende Sekante gestaltet ist. Der Dichtungsstopfen 30 kann somit nur in einer definierten Position korrekt montiert werden. Um sicherzustellen, dass der Dichtungsstopfen 30 auch in dieser korrekten Position angesetzt und in die Aussparung 21 eingedrückt wird, ist der nach innen ragende, kegelstumpfförmige Ansatz 32 mit einer entsprechenden Profilierung versehen, d.h. einer Abflachung 34. Damit wird sichergestellt, dass der Dichtungsstopfen 30 auch richtig angesetzt wird.

Der Flachstecker 22 wird in eine Vertiefung 35 des Dichtungsstopfens 30 eingesteckt, die an seine Kontur angepasst ist. Aufgrund der kegelstumpfförmigen Form des nach außen ragenden Ansatzes 31 des Dichtungsstopfens 30 kann der Flachstecker 22 sicher ergriffen werden, wenn er auf die Kontaktstifte aufgesteckt und gegebenenfalls wieder abgezogen wird. Eine Zugkraft an dem Flachkabel 23 ist nicht erforderlich.

Wie insbesondere aus Fig. 4 zu ersehen ist, hat die Vertiefung 35 einen Boden, in dem zwei Öffnungen 36 für die Kontaktstifte vorgesehen sind, die die Kontaktstifte unter leichter elastischer Deformation umschließen.

## Patentansprüche

1. Zirkulationspumpe einer Warmwasserversorgung mit einem Elektromotor (10) und mit einer Steuerung, die zum Ein- und Ausschalten der Zirkulationspumpe dient und die eine Schaltungsanordnung (17, 20, 26, 29) zur Verarbeitung der Signale eines die Temperatur im Vorlauf einer Zirkulationsleitung erfassenden Sensors und eines die Temperatur im Rücklauf der Zirkulationsleitung erfassenden Sensors umfasst, wobei die Schaltungsanordnung an die Motorsteuerung des Elektromotors der Zirkulationspumpe angeschlossen ist, die Schaltungsanordnung (17, 20, 26, 29) zur Verarbeitung der Signale und die Motorsteuerung in einem an dem Pumpengehäuse der Zirkulationspumpe anbringbaren Gehäuse (13, 14) angeordnet ist, das einen den Elektromotor (10) umgebenden Mantel (13) und eine Kappe (14) aufweist, wobei
- der Mantel (13) in Richtung von einem Rotor (11) des Elektromotors (10) hinweg mittels der Kappe (14) fortgesetzt wird,
- eine Stromversorgung zu dem Elektromotor (10) über ein Versorgungskabel erfolgt, das durch eine Kabeltülle (16) in den Raum der Kappe (14) hereingeführt wird,
- innerhalb der Kappe (14) eine Platine mit der Motorsteuerung und eine Platine (17) mit der Schaltungsanordnung untergebracht sind,
- die Platine (17) mit der Schaltungsanordnung innen im Bereich der Stirnseite der Kappe (14) angeordnet und mit der Platine der Motorsteuerung über eine in Kontaktleisten der Platinen eingesteckte Zwischenplatine (19) verbunden ist und
- die Platine (17) mit der Schaltungsanordnung mit Kontaktstiften versehen ist, die von außen durch eine Öffnung (21) einer Seitenwand der Kappe (14) zugänglich sind und die zum Aufstecken eines über ein Kabel (23) mit dem die Temperatur im Vorlauf erfassenden Sensor verbundenen Steckers (22) dienen.

2. Zirkulationspumpe nach Anspruch 1, **dadurch gekennzeichnet, dass** der Sensor zum Erfassen der Temperatur im Rücklauf im Inneren der Zirkulationspumpe angeordnet und über die Zwischenplatine (19) mit der Platine (17) der Schaltungsanordnung zur Verarbeitung der Signale verbunden ist.

3. Zirkulationspumpe nach Anspruch 1 oder 2, **dadurch gekennzeichnet, dass** die Öffnung (21) der Kappe (14) im Bereich der Kontaktstifte mit einem Dichtungsstopfen (30) aus gummielastischem Material versehen ist, der den Stecker (22) dichtend aufnimmt.

4. Zirkulationspumpe nach Anspruch 3, **dadurch gekennzeichnet, dass** der Dichtungsstopfen (30) eine Vertiefung (35) zur Aufnahme des Steckers (22) aufweist, deren Boden mit Öffnungen (36) für die Kontaktstifte versehen ist.

5. Zirkulationspumpe nach Anspruch 4, **dadurch gekennzeichnet, dass** die Vertiefung (35) zur Aufnahme eines Flachsteckers (22) eine schlitzartige Gestalt besitzt.

6. Zirkulationspumpe nach einem der Ansprüche 3 bis 5, **dadurch gekennzeichnet, dass** der nach außen von der Kappe (14) abregende Teil (31) des Dichtungsstopfens (30) kegelstumpfförmig gestaltet ist.

7. Zirkulationspumpe nach einem der Ansprüche 3 bis 4, **dadurch gekennzeichnet, dass** der Dichtungsstopfen (30) mit einer umlaufenden Nut (33) in die Öffnung (21) der Seitenwand der Kappe (14) einrastbar ist.

8. Zirkulationspumpe nach einem der Ansprüche 3 bis 7, **dadurch gekennzeichnet, dass** die Öffnung (21) der Seitenwand der Kappe (14) und die Nut (33) des Dichtungsstopfens (30) mit einander entsprechenden Profilierungen versehen sind.

9. Zirkulationspumpe nach Anspruch 8, **dadurch gekennzeichnet, dass** der nach innen in die Kappe (14) ragende Teil (32) des Dichtungsstopfens (30) kegelstumpfförmig ausgeführt ist und eine der Profilierung der Aussparung (21) der Kappe (14) angepasste Profilierung (34) besitzt.

## Claims

1. Circulation pump of a hot water supply, including an electric motor (10) and a control unit for turning the circulation pump on and off, and comprising a circuit arrangement (17, 20, 26, 29) for processing signals of a sensor detecting the temperature in the inlet flow of a circulation line and of a sensor detecting the temperature in the return flow of the circulation line, wherein the circuit arrangement is connected to the motor control unit of the electric motor of the circulation pump, the circuit arrangement (17, 20, 26, 29) for processing the signals and the motor control unit are disposed in a housing (13, 14) attachable to the pump housing of the circulation pump, said housing including a casing (13), enclosing the electric motor (10), and a cap (14), wherein
- in the direction away from a rotor (11) of the electric motor (10) the casing (13) is extended by means of the cap (14),
- a power supply to the electric motor (10) is provided via a supply line which is passed through a cable sleeve (16) into the cavity of the cap (14),
- within the cap (14) a circuit board with the motor control unit and a circuit board (17) with the circuit arrangement are accommodated,
- the circuit board (17) with the circuit arrangement is disposed inside in the vicinity of the end face of the cap (14) and is connected to the circuit board of the motor control unit via an adaptor circuit board (19) plugged in contact strips of the circuit boards, and
- the circuit board (17) with the circuit arrangement is provided with contact pins which are accessible from the outside through an opening (21) in a lateral wall of the cap (14) and which are for plugging on a plug (22) connected via a cable (23) to the sensor for detecting the temperature in the inlet flow.

2. Circulation pump according to claim 1, **characterized in that** the sensor for detecting the temperature in the return flow is disposed within the interior of the circulation pump and is connected via the adaptor circuit board (19) to the circuit board (17) of the circuit arrangement for processing the signals.

3. Circulation pump according to claim 1 or 2, **characterized in that** the opening (21) of the cap (14) is provided with a sealing stopper (30) made of rubberelastic material in the vicinity of the contact pins, said stopper receiving the plug (22) in a sealing manner.

4. Circulation pump according to claim 3, **characterized in that** the sealing stopper (30) has a recess (35) for receiving the plug (22), with the bottom of the recess being provided with holes (36) for the contact pins.

5. Circulation pump according to claim 4, **characterized in that** the recess (35) has a slot-type design for receiving a flat plug (22).

6. Circulation pump according to any one of the claims 3 to 5, **characterized in that** the portion (31) of the sealing stopper (30) projecting outwards from the cap (14) has a frustoconical design.

7. Circulation pump according to any one of the claims 3 to 4, **characterized in that** the sealing stopper (30) has a circumferential groove (33) lockable in the opening (21) in the lateral wall of the cap (14).

8. Circulation pump according to any one of the claims 3 to 7, **characterized in that** the opening (21) in the lateral wall of the cap (14) and the groove (33) of the sealing stopper (30) are provided with mutually matching profiles.

9. Circulation pump according to claim 8, **characterized in that** the portion (32) of the sealing stopper (30) projecting inwards into the cap (14) has a frustoconical design and has a profile (34) matching to the profile of the notch (21) of the cap (14).

## Revendications

1. Pompe de circulation d'une alimentation d'eau chaude comprenant un moteur électrique (10) et une commande qui sert à allumer et éteindre la pompe de circulation et qui comprend un système de circuit (17, 20, 26, 29) pour traiter les signaux d'un capteur détectant la température à l'aller d'une conduite de circulation et d'un capteur détectant la température au retour de la conduite de circulation, le système de circuit étant raccordé à la commande de moteur du moteur électrique de la pompe de circulation, le système de circuit (17, 20, 26, 29) pour traiter les signaux et la commande de moteur étant disposés dans un boîtier (13, 14) pouvant être monté sur le boîtier de pompe de la pompe de circulation, lequel boîtier présente une enceinte (13) entourant le moteur électrique (10) et une coiffe (14),
- l'enceinte (13) se prolongeant dans la direction d'un rotor (11) du moteur électrique (10) par le biais de la coiffe (14),
- une alimentation électrique au moteur électrique (10) se produisant par le biais d'un câble d'alimentation qui est guidé à travers une gaine de câble (16) à l'intérieur de l'espace de la coiffe (14),
- une platine avec la commande de moteur et une platine (17) avec le système de circuit étant montées à l'intérieur de la coiffe (14),
- la platine (17) avec le système de circuit étant disposée à l'intérieur dans la région du côté frontal de la coiffe (14) et étant connectée à la platine de la commande de moteur par le biais d'une platine intermédiaire (19) enfichée dans des barrettes de contact des platines et
- la platine (17) avec le système de circuit étant munie de broches de contact qui sont accessibles depuis l'extérieur à travers une ouverture (21) d'une paroi latérale de la coiffe (14) et qui servent à enficher un connecteur (22) connecté par le biais d'un câble (23) au capteur détectant la température dans la section aller.

2. Pompe de circulation selon la revendication 1, **caractérisée en ce que** le capteur pour détecter la température dans la section de retour est disposé à l'intérieur de la pompe de circulation et est connecté par le biais de la platine intermédiaire (19) à la platine (17) du système de circuit pour traiter les signaux.

3. Pompe de circulation selon la revendication 1 ou 2, **caractérisée en ce que** l'ouverture (21) de la coiffe (14) est pourvue dans la région des broches de contact d'un bouchon d'étanchéité (30) en matériau ayant l'élasticité du caoutchouc, qui reçoit de manière hermétique le connecteur (22).

4. Pompe de circulation selon la revendication 3, **caractérisée en ce que** le bouchon d'étanchéité (30) présente un renfoncement (35) pour recevoir le connecteur (22), dont le fond est pourvu d'ouvertures (36) pour les broches de contact.

5. Pompe de circulation selon la revendication 4, **caractérisée en ce que** le renfoncement (35) pour recevoir un connecteur plat (22) présente une forme de type fendue.

6. Pompe de circulation selon l'une quelconque des revendications 3 à 5, **caractérisée en ce que** la partie (31) du bouchon d'étanchéité (30) faisant saillie vers l'extérieur depuis la coiffe (14) est configurée sous forme tronconique.

7. Pompe de circulation selon l'une quelconque des revendications 3 à 4, **caractérisée en ce que** le bouchon d'étanchéité (30) peut être encliqueté avec une rainure périphérique (33) dans l'ouverture (21) de la paroi latérale de la coiffe (14).

8. Pompe de circulation selon l'une quelconque des revendications 3 à 7, **caractérisée en ce que** l'ouverture (21) de la paroi latérale de la coiffe (14) et la rainure (33) du bouchon d'étanchéité (30) sont pourvues de profilages se correspondant mutuellement.

9. Pompe de circulation selon la revendication 8, **caractérisée en ce que** la partie (32) du bouchon d'étanchéité (30) faisant saillie vers l'intérieur dans la coiffe (14) est réalisée sous forme tronconique et possède un profilage (34) adapté au profilage de l'évidement (21) de la coiffe (14).
